# EUROPÄISCHE PATENTSCHRIFT

(11) **EP 2 845 251 B1**
(45) Veröffentlichungstag und Bekanntmachung des Hinweises auf die Patenterteilung: **30.08.2017**
(21) Anmeldenummer: 13719123.5
(22) Anmeldetag: 30.04.2013
(51) Int. Cl.: H01M 4/66, H01G 9/04, H01G 9/00, C25D 5/16, H01G 11/04, H01G 11/68, H01G 11/70, H01M 4/70

(54) **TEXTURIERTE STROMABLEITERFOLIE**
TEXTURED CURRENT COLLECTOR FOIL
FEUILLE TEXTURÉE COLLECTRICE DE COURANT

(30) Priorität: 02.05.2012 DE 102012103834
(43) Veröffentlichungstag der Anmeldung: 11.03.2015
(73) Patentinhaber: Hydro Aluminium Rolled Products GmbH, 41515 Grevenbroich (DE)
(72) Erfinder: HAMPEL, Ulrich, 41516 Grevenbroich (DE); ECKHARD, Kathrin, 53123 Bonn (DE); JUPP, Simon, 53113 Bonn (DE); SIEMEN, Andreas, 41363 Jüchen (DE)
(74) Vertreter: Cohausz & Florack
(86) Internationale Anmeldenummer: PCT/EP2013/059003
(87) Internationale Veröffentlichungsnummer: WO 2013/164345

(56) Entgegenhaltungen:
- EP-A2- 0 397 523
- WO-A1-2012/002380
- DE-A1- 10 108 893
- JP-A- 2010 123 494
- US-A1- 2007 166 613
- US-A1- 2009 269 609
- US-A1- 2013 108 922

## Beschreibung

Die Erfindung betrifft eine Stromableiterfolie beschichtet mit einem Aktivelektrodenmaterial für Batterien oder Akkumulatoren mit einem Trägermaterial und mindestens einer elektrisch leitfähigen Schicht aus einem Metall, wobei die mindestens eine elektrisch leitfähige Schicht zumindest teilweise durch Elektrodeposition von Aluminium hergestellt ist und eine Textur aufweist, das Trägermaterial eine Aluminiumfolie ist, welche aus Aluminium- oder einer Aluminiumlegierung besteht und die Stromableiterfolie für die Kathode vorgesehen ist. Daneben betrifft die Erfindung ein Herstellverfahren für eine entsprechende Stromableiterfolie sowie deren vorteilhafte Verwendung.

Die Bereitstellung von effizienten, kostengünstigen und langlebigen Mitteln zur Speicherung elektrischer Energie ist eine der Schlüsseltechnologien, welche für die Umrüstung von Kraftfahrzeuge auf elektrische Antriebe sowie die Erschließung von regenerativen Energiequellen von Bedeutung ist. Als Mittel zur Speicherung elektrischer Energie werden heute Batterien, Akkumulatoren oder Kondensatoren verwendet. Insbesondere Akkumulatoren, vorzugsweise Lithium-Ionen-Akkumulatoren weisen hohe Energiedichten auf und ermöglichen damit eine effiziente Speicherung elektrischer Energie. Die Stromableiterfolien der Kathode eines Lithium-Ionen-Akkumulators können aus einer Aluminiumfolie bestehen, welche bei niedrigen Materialkosten eine sehr gute elektrische Leitfähigkeit bereitstellt. Die Stromableiterfolie der Kathode ist dabei zusätzlich mit einem Metalloxid beschichtet, beispielsweise mit einem Lithium-Kobalt-Oxid, Lithium-Mangan-Oxid, Lithium-Eisen-Phosphat oder anderen Aktivelektrodenmaterialien. Das Metalloxid bildet das Aktivelektrodenmaterial, welches Lithium-Ionen beim Entladevorgang aufnehmen und beim Ladevorgang wieder an eine Anode, deren Aktivelektrodenmaterial beispielsweise Graphit ist, abgeben kann. Im Hinblick auf die Lebensdauer des Lithium-Ionen-Akkumulators sowie dessen Kapazitätserhaltung wurde festgestellt, dass die Größe der Kontaktfläche und die Haftung zwischen Aktivelektrodenmaterial und Stromableiterfolie eine Rolle spielen. Für konstante Lade-und Entladeeigenschaften des Lithium-Ionen-Akkumulators ist die Haftung zwischen der Stromableiterfolie und dem Aktivelektrodenmaterial sowie die Kontaktfläche der Stromableiterfolie mit dem Aktivelektrodenmaterial eine entscheidende Voraussetzung. Bei einem teilweisen Ablösen des Aktivelektrodenmaterials erniedrigt sich die Kapazität bis hin zum vollständigen Defekt des Akkumulators. Darüber hinaus ist zur Erzeugung einer maximalen Kapazität die Maximierung der Kontaktfläche zwischen Stromableiterfolie und Aktivelektrodenmaterial gewünscht. Gleiches gilt prinzipiell auch für andere Arten von Akkumulatoren, Batterien und Kondensatoren, welche Stromableiterfolien aufweisen und ähnlich aufgebaut sind.

Aus der deutschen Offenlegungsschrift DE 101 08 893 A1 ist ferner ein Verfahren zum elektrochemischen Abscheiden von Metallen, insbesondere von Aluminium aus ionischen Flüssigkeiten bekannt.

Die EP 0 397 523 A2 betrifft eine Feststoffzelle mit einer Stromableiterfolie, wobei die Stromableiterfolie ein Trägermaterial und eine elektrisch leitfähige Schicht aus einem Metall aufweist.

In der DE 101 08 893 A1 wird ein Verfahren zur elektrochemischen Abscheidung von Metallen beschrieben.

Die US 2009/0269609 A1 offenbart eine Aluminiumfolie als Elektrodenmaterial, wobei die Folie über ein Halten bei Temperaturen zwischen 80 und 160 °C entfettet wird.

Aus der japanischen Patentanmeldung JP 2010123494 sind Elektroden für die Anode einer Lithiumbatterie bekannt, welche aus Kupfer oder einer Kupferlegierung hergestellt ist, und eine spezifisch an das aktive Elektrodenmaterial angepasste Größe aufweist.

Die internationale Patenanmeldung WO 2012/002380 A1 sowie die US Patentanmeldung US 2007/0166613 A1 zeigen Stromableiterfolien der Anode einer Lithiumbatterie, die ebenfalls aus Kupfer bestehen und über Elektrodeposition aufgebrachte Kupferpartikel von 0,1 µm bis 3 µm, respektive 0,1 µm bis 100 µm Größe aufweisen. Aus keinem Dokument sind jedoch Texturen der Stromableiterfolie der Kathode einer Lithiumbatterie bekannt.

Hiervon ausgehend liegt der vorliegenden Erfindung die Aufgabe zugrunde eine Stromableiterfolie für Batterien, Akkumulatoren oder Kondensatoren zur Verfügung zu stellen, welche im Bezug auf die Kontaktfläche und die Haftungseigenschaften optimiert ist und zu einer Verbesserung der Lebensdauer führt.

Gemäß einer ersten Lehre der vorliegenden Erfindung wird die oben aufgezeigte Aufgabe durch eine Stromableiterfolie mit den Merkmalen des Patentanspruches 1 gelöst. d.

Elektrodeposition ist ein Abscheideverfahren, welches einerseits erlaubt hochreine Metalle auf eine Oberfläche abzuscheiden und gleichzeitig eine Texturierung der Oberfläche des abgeschiedenen Metalls bereitzustellen. Diese Strukturierung der Oberfläche führt zu einer deutlichen Vergrößerung der Kontaktfläche und darüber hinaus zu einem verbesserten Haftungsverhalten, beispielsweise von Aktivelektrodenmaterial eines Lithium-Ionen-Akkumulators aber auch des Elektrolyten eines Kondensators. Aufgrund der hochreinen Abscheidung von Metallen ermöglicht die Elektrodeposition gleichzeitig eine Erniedrigung der elektrischen Widerstände bei der Elektrodeposition von Aluminium.

Die Größenordnung der Textur ist an die Partikelgröße des Aktivelektrodenmaterials angepasst. Unter dieser Anpassung wird erfindungsgemäß verstanden, dass die Textur Eigenschaften, also eine Oberflächenrauheit, -welligkeit oder -struktur aufweist, die in der gleichen Größenordnung liegen wie die Partikelgröße des Aktivelektrodenmaterials. Weist das Aktivelektrodenmaterial beispielsweise eine Partikelgröße von 0,1 µm auf, werden unter einer gleichen Größenordnung Strukturen mit einer Größe zwischen mehr als 0,01 µm und weniger als 1 µm verstanden. Hierdurch wird erreicht, dass das Aktivelektrodenmaterial besonders gut an der Stromableiterfolie haften kann.

Erfindungsgemäß ist die Stromableiterfolie für die Kathode vorgesehen und die elektrisch leitfähige Schicht zumindest teilweise durch Elektrodeposition von Aluminium hergestellt. Aluminium lässt sich in ausreichender Menge auf einem Trägermaterial abscheiden, so dass eine elektrisch leitfähige Schicht mit einer Textur entsteht. Die erzeugte Textur vergrößert beispielsweise die Kontaktfläche zum Aktivelektrodenmaterial eines Akkumulators deutlich. Das abgeschiedene Aluminium weist beispielsweise eine Struktur im Nanometer- oder Submikrometer-Bereich auf, welche die Textur der Stromableiteroberfläche bestimmt.
In Fällen wo sich aufgrund der Potentialverhältnisse Aluminium auch als Anode eignet, wie beispielsweise bei Aktivanodenmaterialien wie Lithium-Titan-Oxid für Akkumulatoren mit hoher Leistung bei gleichzeitig niedriger Energie, kann die texturierte Folie selbstverständlich auch als Anodenstromableiter eingesetzt werden.

Gemäß einer weiteren Ausgestaltung der vorliegenden Stromableiterfolie ist das Trägermaterial eine Aluminiumfolie, welche aus Aluminium oder einer Aluminiumlegierung besteht. Die Übergangswiderstände zwischen der Aktivelektrodenpaste und der Stromableiterfolie kann durch das abgeschiedene Aluminium deutlich verringert werden. Die Aluminiumfolie, welche das Trägermaterial bildet ist darüber hinaus ideal für die Elektrodeposition von Aluminium geeignet. Sie kann darüber hinaus mit geringem elektrischem Widerstand auch den Stromabfluss verbessern. Darüber hinaus kann eine Aluminiumfolie kostengünstig und in den notwendigen Breiten und Dicken von 5 µm bis 50 µm, vorzugsweise 10 µm bis 25 µm hergestellt und anschließend durch Elektrodeposition plattiert werden.

Erfindungsgemäß beträgt die Kristallitgröße des abgeschiedenen Aluminiums 1 nm bis 500 nm, bevorzugt 25 nm - 500 nm. Die Kristallitgröße und die Menge der abgeschiedenen Kristallite bestimmt die Rauhigkeit der abgeschiedenen elektrisch leitfähigen Schicht. Durch Anpassung der Rauhigkeit der Oberfläche an die jeweilige Partikelstruktur der aufzutragenden Aktivelektrodenpaste wird eine besonders gute Haftung zwischen Stromableiterfolie und Aktivelektrodenmaterial erzielt. Zusätzlich vergrößert sich durch die abgeschiedenen Aluminiumkristallite die Kontaktfläche zwischen Aktivelektrodenmaterial und Stromableiterfolie.

Um die Verarbeitung der Stromableiterfolie zu einem Kondensator, einer Batterie oder eines Akkumulators zu erleichtern, ist die Aluminiumfolie gemäß einer weiteren Ausführungsform walzhart. Walzhart bedeutet, dass die Aluminiumfolie keiner Endglühung oder thermischen Entfettung nach dem Kaltwalzen unterzogen wurde. Die walzharte Aluminiumfolie weist in Bezug auf die mechanische Zugfestigkeit daher maximale Werte auf und ist insofern besser zur Verarbeitung geeignet.

Typischerweise besteht die Stromableiterfolie aus einer Aluminiumlegierung vom Typ ENAW 1050, ENAW 1200 oder ENAW 1058. Die genannten Aluminiumlegierungen sind allesamt niedrig legiert und weisen damit eine sehr gute elektrische Leitfähigkeit auf. Darüber hinaus lassen sich alle drei Aluminiumlegierungen sehr gut zu Aluminiumfolien mit Dicken von 5 µm - 50 µm bzw. 15 - 25 µm kaltwalzen.

Bevorzugt kann auch eine Aluminiumfolie mit einer alkalisch oder sauer gebeizten Oberfläche für die Elektrodeposition verwendet werden. Diese Aluminiumfolien müssen nicht zur Entfettung geglüht werden und weisen deshalb maximal erreichbare mechanische Zugfestigkeiten auf. Diese liegen beispielsweise oberhalb von 135 MPa.

Gemäß einer zweiten Lehre der vorliegenden Erfindung wird die oben aufgezeigte Aufgabe durch ein Verfahren zur Herstellung einer Stromableiterfolie für die Kathode einer Batterie oder Akkumulators mit den Merkmalen des Patentanspruches 4 gelöst.

Als Trägermaterial kommt in der Regel eine Metallfolie in Frage. Die Elektrodeposition von Aluminium führt dazu, dass strukturierte Texturen auf dem Trägermaterial erzeugt werden, welche im Bezug auf die Bereitstellung einer möglichst großen Kontaktfläche mit möglichst großer Haftung sowie aufgrund der hohen Reinheit des abgeschiedenen Metalls in Bezug auf den elektrischen Widerstand optimiert ist. Die elektrisch leitfähige Schicht kann insofern optimale Eigenschaften in Verbindung beispielsweise mit dem Aktivelektrodenmaterial eines Lithium-Ionen-Akkumulators aufweisen.

Erfindungsgemäß besteht das Trägermaterial aus einer Aluminiumfolie aus Aluminium oder einer Aluminiumlegierung, welche durch die Elektrodeposition von Aluminium texturiert wird. Hierdurch kann eine die Lebensdauer einer Batterie oder Akkumulators erhöhende Stromableiterfolie für die Kathode bereitgestellt werden.

Die Größenordnung der Textur des auf dem Trägermaterial abgeschiedenen Aluminiums entspricht der Partikelgröße des Aktivelektrodenmaterials, sodass die Haftung und die Kontaktfläche zwischen Aktivelektrodenmaterial und Stromableiterfolie optimiert werden kann.

Vorzugsweise erfolgt die Elektrodeposition aus einer ionischen Flüssigkeit, so dass auch unedle Metalle, wie beispielsweise Aluminium abgeschieden werden können. Als Elektrolyt werden ionische Flüssigkeiten, niedrig schmelzende Salze oder Salzgemische beispielsweise bestehend aus Fluorophosphaten oder Sulfonaten von Imidazoliumsalzen unter Zusatz von Metallhalogeniden verwendet.

Um die einzustellende Textur zu steuern und zu regeln, kann die Elektrodeposition potentiostatisch oder galvanostatisch durchgeführt werden. Bei der potentiostatischen Elektrodeposition wird während der Elektrodeposition das Elektrodenpotential konstant gehalten. Dagegen wird bei der galvanostatischen Elektrodeposition die Stromstärke konstant gehalten.

Gemäß einer weiteren Ausgestaltung des erfindungsgemäßen Verfahrens wird die Elektrodeposition durch eine galvano-oder potentiostatische monopolare oder bipolare Pulsabscheidung durchgeführt, wobei die Metallabscheidung zumindest durch die Pulshöhe, Pulsbreite, Pausenlänge oder Frequenz oder einer Kombination aus den genannten Größen gesteuert wird. Aufgrund der Anzahl der genannten Parameter kann das Verfahren in Bezug auf die Formierung einer optimalen Textur auf dem Trägermaterial eingestellt werden. Damit kann die durch Elektrodeposition erzeugte Textur auf das eingesetzte Aktivelektrodenmaterial hin optimiert werden.

Durch die Abscheidung vergrößert sich die Oberfläche der Stromableiterfolie und es ergibt sich eine größere Kontaktfläche zum Aktivelektrodenmaterial. Vorzugsweise wird durch die Abscheideparameter wie Pulshöhe, Pulsbreite, Pausenlänge oder Frequenz in Verbindung mit den verwendeten Elektrolytmaterialien die Kristallitgröße des abgeschiedenen Aluminiums auf 1 nm bis 500 nm, bevorzugt auf 25 nm - 500 nm eingestellt. Die Kristallitgrößen und die sich daraus ergebende Textur können auf die Partikelgrößen der Aktivelektrodenmasse angepasst werden, was in Bezug auf die Hafteigenschaften zwischen Aktivelektrodenmaterial und Stromableiterfolie gewünscht ist.

Ein besonders wirtschaftliches Verfahren zur Bereitstellung einer erfindungsgemäßen Stromableiterfolie kann dadurch erzielt werden, dass gemäß einer weiteren Ausgestaltung die Elektrodeposition in einem Coil-to-Coil-Verfahren durchgeführt wird. Entsprechende Coil-to-Coil-Verfahren sind besonders effizient, da die Elektrodeposition bandweise erfolgt und das so hergestellte Coil mit einer texturierten Stromableiter auf einfache Weise weiteren Bandweisen Verarbeitungsschritten, beispielsweise dem Beschichten mit Metalloxid, zugeführt werden kann. Es können so in kurzer Zeit große Mengen an Stromableiterfolie hergestellt werden.

Schließlich wird die oben aufgezeigte Aufgabe durch die Verwendung einer erfindungsgemäßen Stromableiterfolie für Batterien, Akkumulatoren, oder Lithium-Ionen-Akkumulatoren gelöst. Bei der Verwendung der erfindungsgemäßen Stromableiterfolie für die genannten Mittel zur Speicherung elektrischer Energie wird erwartet, dass aufgrund der Submikrometer-Textur der erfindungsgemäßen Stromableiterfolie die Lebensdauer von Batterien, Akkumulatoren, oder Lithium-Ionen-Akkumulatoren deutlich positiv beeinflusst wird. Darüber hinaus ermöglicht die Elektrodeposition eine Vergrößerung der Kontaktfläche zwischen Stromableiterfolie und Aktivelektrodenmaterial bzw. Elektrolyt, so dass eine vergrößerte Kapazität der Batterie, oder des Akkumulators die Folge ist. Im Weiteren soll die Erfindung anhand von Ausführungsbeispielen in Verbindung mit der Zeichnung näher erläutert werden. Die Zeichnung zeigt in
- Fig. 1: eine schematische Darstellung eines Lithium-Ionen-Akkumulators,
- Fig. 2: ein erstes Ausführungsbeispiel der erfindungsgemäßen Stromableiterfolie in einer schematischen Darstellung und
- Fig. 3: in einer schematischen Darstellung eine Vorrichtung zur Durchführung eines Coil-to-Coil-Verfahrens zur Herstellung einer Stromableiterfolie.

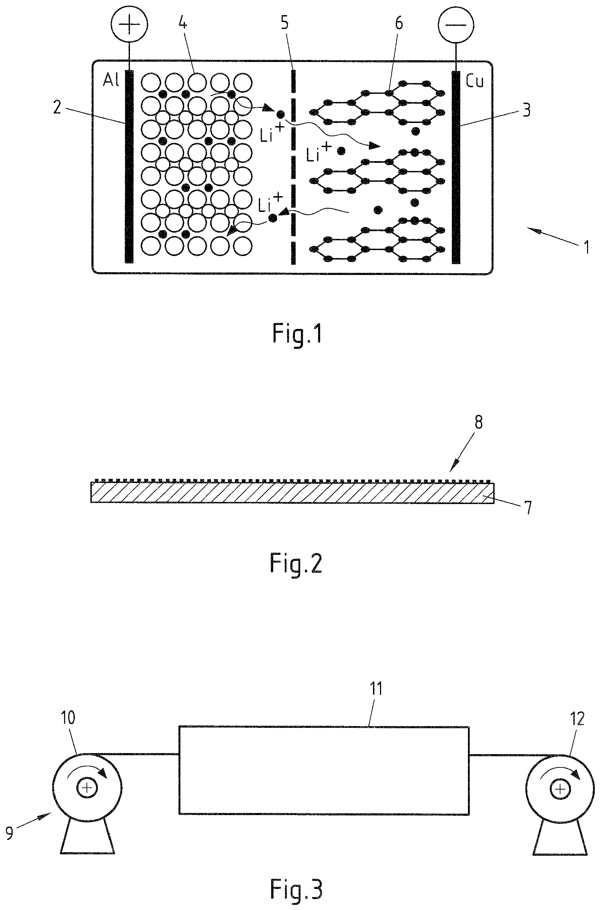

Fig. 1 zeigt den typischen Aufbau eines Lithium-Ionen-Akkumulators 1, welcher eine Stromableiterfolie 2 an der Kathode und eine Stromableiterfolie 3 an der Anode aufweist. Die kathodische Stromableiterfolie 2 ist zusätzlich mit einem Metalloxid, beispielsweise einem Lithium-Kobalt-Oxid 4 beschichtet. Ein Separator 5, welcher lediglich durchlässig für Lithium-Ionen Li⁺ ist, trennt die Metalloxidbeschichtung der Kathode von dem aktiven Elektrodenmaterial der Anode, welches beispielsweise durch Graphit 6 gebildet wird. Die Anode 3 ist beispielsweise durch eine Stromableiterfolie aus Kupfer bereitgestellt. Für die Kapazität eines Lithium-Ionen-Akkumulators aber auch für einen Kondensator bzw. eine entsprechende Batterie ist die zur Verfügung stehende Fläche, auf welcher Ladung gespeichert werden kann, ein wichtiges Kriterium. Die in Fig. 1 dargestellten Stromableiterfolien der Anode und der Katode können daher eine elektrisch leitfähige Schicht aufweisen, welche zumindest teilweise durch Elektrodeposition eines Metalls hergestellt ist und eine Textur aufweist. Die durch Elektrodeposition von Aluminium erzeugte Textur auf der Stromableiterfolie führt zu einer Vergrößerung der Oberfläche der Stromableiterfolie und damit zu der Kontaktfläche zwischen dem Aktivenelektrodenmaterial 4, 6 und den zugehörigen Stromableiterfolien 2, 3. Es hat sich gezeigt, dass die Haftungseigenschaften des aktiven Elektrodenmaterials 4, 6 aufgrund der Textur der Stromableiterfolien 2, 3 ebenfalls verbessert werden kann. Die Textur der Stromableiterfolien 2, 3 weist aufgrund des Herstellverfahrens durch Elektrodeposition Dimensionen beispielsweise im Mikrometer- bzw. im Submikrometer-Bereich auf.

Die Struktur der abgeschiedenen Aluminiumschicht ist bevorzugt im Hinblick auf die Größenordung an die Partikelgröße des Metalloxids angepasst, um eine besonders gute Haftung des Metalloxids zu gewährleisten. In diesem Fall liegt die Größe beispielsweise der Oberflächenwelligkeit, - rauheit oder -struktur in der Größenordnung, d.h. der Unterschied beträgt maximal Faktor 10, der Partikelgröße des Metalloxids.

Fig. 2 zeigt nun in einer schematischen Schnittansicht ein Ausführungsbeispiel einer erfindungsgemäßen Stromableiterfolie, welche aus einem Trägermaterial 7 und einer auf dem Trägermaterial angeordneten elektrisch leitfähigen Schicht 8 besteht. Vorzugsweise besteht das Trägermaterial aus einer Aluminiumfolie, beispielsweise einer walzharten Aluminiumfolie aus einer Aluminiumlegierung vom Typ ENAW 1085. Entsprechende Aluminiumlegierungsfolien können in einer Dicke von vorzugsweise 5 - 50 µm, insbesondere 10 - 25 µm in walzhartem Zustand bereitgestellt werden, so dass diese eine relativ hohe Zugfestigkeit aufweisen. Hierdurch wird die Verarbeitung der Aluminiumfolien zur Stromableiterfolie erleichtert. Die in Fig. 2 dargestellte Stromableiterfolie weist zudem eine durch Elektrodeposition aufgebrachte elektrisch leitfähige Schicht 8 auf, welche eine Textur im Submikrometer-Bereich aufweist. Die bei der Elektrodeposition aufgebrachte Aluminiumschicht weist abhängig von den verwendeten Parametern bei der Elektrodeposition eine Kristallitgröße von 1 nm - 500 nm, vorzugsweise 25 nm - 500 nm auf. Die Kristallitgröße beeinflusst die erzeugte Textur, wobei die Anpassung der Oberflächentextur an die Partikelgröße des Aktivelektrodenmaterials derzeit als günstiger für die Lebensdauer eines Lithium-Ionen-Akkumulators angesehen wird.

Grundsätzlich ist auch denkbar die Trägerschicht aus einem anderen Material als die durch Elektrodeposition aufgebrachte elektrisch leitfähige Schicht herzustellen. Vorzugsweise wird jedoch ein identisches Materialsystem, also beispielsweise bei einer Aluminiumdeposition eine Aluminiumlegierung gewählt, um Korrosionsproblemen vorzubeugen.

Fig. 3 zeigt in einer sehr schematischen Darstellung eine Vorrichtung zur Herstellung einer Stromableiterfolie in einem Coil-to-Coil-Verfahren. Zunächst zeigt Fig. 3 eine Abwickelhaspel 9, auf welcher ein Coil 10, welches beispielsweise aus einer Aluminiumfolie bestehend aus der Aluminiumlegierung vom Typ ENAW 1085 besteht, angeordnet ist. Die Folie wird abgewickelt und einer Vorrichtung zur Durchführung der Elektrodeposition 11 zugeführt. In der Vorrichtung 11 wird das Trägermaterial, vorliegend hier die Aluminiumfolie durch Elektrodeposition aus einer ionischen Flüssigkeit potentiostatisch oder galvanostatisch mit Aluminium beschichtet. Als ionische Flüssigkeit kommt beispielsweise 1-Ethyl-3Methyl-1H-Imidazoliumchlorid (EMIC) gemischt mit wasserfreiem Aluminiumchlorid in Frage. Durch Anlegen einer Spannung zwischen der als Kathode fungierenden Aluminiumfolie und einer Gegenelektrode, beispielsweise aus Glaskohlenstoff kann eine Beschichtung der Aluminiumfolie mit Aluminium aus der ionischen Flüssigkeit erreicht werden. Anschließend wird die beschichtete Aluminiumfolie wieder zu einem Coil mit einer Aufwickelhaspel 12 aufgewickelt.

Die erfindungsgemäße Stromableiterfolie ermöglicht es, die Lebensdauer und Kapazitätserhaltung von Akkumulatoren, Batterien und Kondensatoren erheblich zu steigern. Gleichzeitig kann durch Elektrodeposition auch großflächig ein Trägermaterial beschichtet werden, so dass die Stromableiterfolie auch wirtschaftlich hergestellt werden kann.

## Patentansprüche

1. Stromableiterfolie (2,3) beschichtet mit einem Aktivelektrodenmaterial für Batterien oder Akkumulatoren mit einem Trägermaterial (7) und mindestens einer elektrisch leitfähigen Schicht (8) aus einem Metall, wobei die mindestens eine elektrisch leitfähige Schicht (8) zumindest teilweise durch Elektrodeposition von Aluminium hergestellt ist und eine Textur aufweist, wobei das Trägermaterial (7) eine Aluminiumfolie ist, welche aus Aluminium- oder einer Aluminiumlegierung besteht und die Stromableiterfolie (2) für die Kathode vorgesehen ist,
**dadurch gekennzeichnet, dass** die Größenordnung der Textur der mindestens einen elektrisch leitfähigen Schicht (8) an die Partikelgröße des Aktivelektrodenmaterials derart angepasst ist, dass die Textur eine Oberflächenstruktur, -welligkeit oder -rauheit aufweist, die in der gleichen Größenordnung wie die Partikelgröße des Aktivelektrodenmaterials liegt und die Kristallitgröße des abgeschiedenen Aluminiums 1 nm bis 500 nm beträgt.

2. Stromableiterfolie nach Anspruch 1,
**dadurch gekennzeichnet, dass** die Stromableiterfolie (2) eine walzharte Aluminiumfolie ist.

3. Stromableiterfolie nach Anspruch 1 oder 2,
**dadurch gekennzeichnet, dass** die Stromableiterfolie (2) aus einer Aluminiumlegierung vom Typ EN AW 1050, EN AW 1200 oder EN AW 1085 besteht.

4. Verfahren zur Herstellung einer Stromableiterfolie gemäß einem der Ansprüche 1 bis 3, welche aus einem Trägermaterial und mindesten einer elektrisch leitfähigen Schicht aus einem Metall besteht, wobei
die elektrisch leitfähige Schicht zumindest teilweise durch Elektrodeposition von Aluminium auf dem Trägermaterial hergestellt wird und mit einem Aktivelektrodenmaterial beschichtet wird, wobei das Trägermaterial (7) eine Aluminiumfolie ist, welche aus Aluminium- oder einer Aluminiumlegierung besteht und, die Stromableiterfolie (2) für die Kathode vorgesehen ist, **dadurch gekennzeichnet, dass** die Größenordnung der Textur der mindestens einen elektrisch leitfähigen Schicht des auf dem Trägermaterial abgeschiedenen Aluminiums der Partikelgröße des Aktivelektrodenmaterials entspricht, so dass die Textur eine Oberflächenstruktur, -welligkeit oder -rauheit aufweist, die in der gleichen Größenordnung wie die Partikelgröße des Aktivelektrodenmaterials liegt, wobei die Kristallitgröße des abgeschiedenen Aluminiums 1 nm bis 500 nm beträgt.

5. Verfahren nach Anspruch 4,
**dadurch gekennzeichnet, dass** die Elektrodeposition aus einer ionischen Flüssigkeit erfolgt.

6. Verfahren nach Anspruch 4 oder 5,
**dadurch gekennzeichnet, dass** die Elektrodeposition potentiostatisch oder galvanostatisch durchgeführt wird.

7. Verfahren nach einem der Ansprüche 4 bis 6,
**dadurch gekennzeichnet, dass** die Elektrodeposition durch eine monopolare oder bipolare Pulsabscheidung erfolgt, wobei die Abscheidung zumindest durch die Pulshöhe, Pulsbreite, Pausenlänge oder Frequenz oder einer Kombination aus den genannten Größen gesteuert wird.

8. Verfahren nach einem der Ansprüche 4 bis 7,
**dadurch gekennzeichnet, dass** die Elektrodeposition in einem Coil-to-Coil-Verfahren durchgeführt wird.

9. Verwendung einer Stromableiterfolie gemäß einem der Ansprüche 1 bis 3 für Batterien, Akkumulatoren, und Lithium-Ionen-Akkumulatoren, wobei die Stromableiterfolie als Kathode vorgesehen ist.

## Claims

1. Current collector foil (2, 3) coated with an active electrode material for batteries or accumulators, comprising a carrier material (7) and at least one electrically conductive layer (8) made from a metal, wherein the at least one electrically conductive layer (8) is produced at least partially by electrodeposition of aluminium and has a texture, wherein the carrier material (7) is an aluminium foil that is made from aluminium or an aluminium alloy and the current collector foil (2) is intended for the cathode,
**characterised in that** the order of magnitude of the texture of the least one electrically conductive layer (8) is adapted to the particle size of the active electrode material in such a way, that the texture has a surface structure, surface waviness or surface roughness, which is of the same order of magnitude as the particle size of the active electrode material and the crystallite size of the deposited aluminium amounts to 1 nm to 500 nm.

2. Current collector foil according to claim 1, **characterised in that** the current collector foil (2) is an as-rolled aluminium foil.

3. Current collector foil according claim 1 or 2, **characterised in that** the current collector foil (2) is made from an aluminium alloy of the type EN AW 1050, EN AW 1200 or EN AW 1085.

4. Method for producing a current collector foil according to any one of claims 1 to 3, which is made from a carrier material and at least one electrically conductive material made from a metal, wherein the electrically conductive layer is produced at least partially by way of electrodepositing aluminium onto the carrier material and is coated with an active electrode material, wherein the carrier material (7) is made from an aluminium foil consisting of aluminium or an aluminium alloy and the current collector foil (2) is intended for the cathode, **characterised in that** the order of magnitude of the texture of the least one electrically conductive layer of the aluminium deposited onto the carrier material corresponds to the particle size of the active electrode material, such that the texture has a surface structure, surface waviness or surface roughness, which is of the same order of magnitude as the particle size of the active electrode material, wherein the crystallite size of the deposited aluminium amounts to 1 nm to 500 nm.

5. Method according to claim 4, **characterised in that** the electrodeposition is carried out from an ionic liquid.

6. Method according to claim 4 to 5, **characterised in that** the electrodeposition is carried out in a potentiostatic or a galvanostatic manner.

7. Method according to any one of claims 4 to 6, **characterised in that** the electrodeposition is carried out by way of a monopolar or bipolar pulsed deposition, wherein the deposition is controlled at least by the pulse height, the pulse width, the pause length or the frequency or a combination of the variables mentioned.

8. Method according to any one of claims 4 to 7, **characterised in that** the electrodeposition is carried out using a coil-to-coil method.

9. Use of a current collector foil according to any one of claims 1 to 3 for batteries, accumulators, and lithium ion accumulators, wherein the current collector foil is provided as the cathode.

## Revendications

1. Feuille collectrice de courant (2, 3) recouverte d'une matière d'électrode active destinée à des batteries ou des accumulateurs, comportant une matière de support (7), et au moins une couche (8) conductrice de l'électricité faite d'un métal, étant entendu que la couche (8) conductrice d'électricité, au nombre d'au moins une, a été obtenue au moins en partie par électrodéposition d'aluminium et présente une texture dans laquelle la matière de support (7) est une feuille d'aluminium, constituée d'aluminium ou d'un alliage d'aluminium, et dans laquelle en outre la feuille collectrice de courant (2) est prévue pour faire office de cathode, **caractérisée en ce que** l'ordre de grandeur de la texture de la couche (8) conductrice d'électricité, au nombre d'au moins une, est adapté à la taille de particules de la matière d'électrode active, de façon telle que la texture présente une structure de surface, une ondulation de surface ou une rugosité de surface se situant dans le même ordre de grandeur que la taille de particules de la matière d'électrode active et **en ce que** la taille de la cristallite de l'aluminium déposé est de 1 nm à 500 nm.

2. Feuille collectrice de courant selon la revendication 1, **caractérisée en ce que** la feuille collectrice de courant (2) est une feuille d'aluminium durcie par laminage.

3. Feuille collectrice de courant selon la revendication 1 ou 2, **caractérisée en ce que** la feuille collectrice de courant (2) est constituée d'un alliage d'aluminium du type EN AW 1050, EN AW 1200 ou EN AW 1085.

4. Procédé de fabrication d'une feuille collectrice de courant selon l'une quelconque des revendications 1 à 3, constituée d'une matière de support et d'au moins une couche conductrice d'électricité, faite d'un métal, étant entendu que la couche conductrice d'électricité, au nombre d'au moins une, a été obtenue au moins en partie par électrodéposition d'aluminium sur la matière de support et est recouverte d'une matière d'électrode active, dans laquelle la matière de support (7) est une feuille d'aluminium , constituée d'aluminium ou d'un alliage d'aluminium, et dans laquelle en outre la feuille collectrice de courant (2) est prévue pour faire office de cathode,
**caractérisée en ce que** l'ordre de grandeur de la texture de la couche conductrice d'électricité, au nombre d'au moins une, de l'aluminium déposé sur la matière de support correspond à la taille de particules de la matière d'électrode active, de façon telle que la texture présente une structure de surface, une ondulation de surface ou une rugosité de surface se situant dans le même ordre de grandeur que la taille de particules de la matière d'électrode active, de sorte que la taille de la cristallite de l'aluminium déposé est de 1 nm à 500 nm.

5. Procédé selon la revendication 4, **caractérisé en ce que** l'électrodéposition est réalisée au départ d'une solution ionique.

6. Procédé selon la revendication 4 ou 5, **caractérisé en ce que** l'électrodéposition est conduite de façon potentiostatique ou galvanostatique.

7. Procédé selon l'une quelconque des revendications 4 à 6, **caractérisé en ce que** l'électrodéposition est réalisée par la libération monopolaire ou bipolaire d'impulsions, de sorte que la déposition est contrôlée à tout le moins par la hauteur de l'impulsion, la largeur de l'impulsion, la durée de la pause ou la fréquence, ou par une combinaison des grandeurs nommées ci-avant.

8. Procédé selon l'une quelconque des revendications 4 à 7, **caractérisé en ce que** l'électrodéposition est conduite dans un procédé de couronne à couronne.

9. Utilisation d'une feuille collectrice de courant selon l'une quelconque des revendications 1 à 3 pour des batteries, des accumulateurs et des accumulateurs lithium-ion, dans laquelle la feuille collectrice de courant fait office de cathode.
